(19) Europäisches Patentamt / European Patent Office / Office européen des brevets

(11) **EP 2 989 254 B1**

(12) **EUROPÄISCHE PATENTSCHRIFT**

(45) Veröffentlichungstag und Bekanntmachung des Hinweises auf die Patenterteilung:
**10.05.2017 Patentblatt 2017/19**

(21) Anmeldenummer: **14714244.2**

(22) Anmeldetag: **28.03.2014**

(51) Int Cl.:
*E01D 19/04* $^{(2006.01)}$     *E04B 1/36* $^{(2006.01)}$
*E04H 9/02* $^{(2006.01)}$

(86) Internationale Anmeldenummer:
**PCT/EP2014/056255**

(87) Internationale Veröffentlichungsnummer:
**WO 2014/173622 (30.10.2014 Gazette 2014/44)**

(54) **BAUWERKS-GLEITLAGER UND BEMESSUNGSVERFAHREN**

STRUCTURAL SLIDING BEARING AND DIMENSIONING METHOD

DISPOSITIF D'APPUI COULISSANT POUR OUVRAGE ET PROCÉDÉ DE DIMENSIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.04.2013 DE 102013104161**

(43) Veröffentlichungstag der Anmeldung:
**02.03.2016 Patentblatt 2016/09**

(73) Patentinhaber: **Maurer Söhne Engineering GmbH & Co. KG**
**80807 München (DE)**

(72) Erfinder:
• **BRAUN, Christian**
**83607 Holzkirchen (DE)**
• **DISTL, Johann**
**82008 Unterhaching (DE)**

(74) Vertreter: **von Hirschhausen, Helge**
**Grosse - Schumacher - Knauer - von Hirschhausen**
**Patent- und Rechtsanwälte**
**Nymphenburger Straße 14**
**80335 München (DE)**

(56) Entgegenhaltungen:
**EP-A2- 0 126 633    WO-A1-2009/010487**
**JP-A- 2007 016 905**

**Beschreibung**

Die Erfindung betrifft ein Bauwerks-Gleitlager, mit wenigstes einem ersten Lagerteil an dem wenigstens ein Gleitelement befestigt ist und einem dazu relativ verschieblich angeordneten zweiten Lagerteil, welches in Paarung mit einer Kontaktfläche des Gleitelements eine Gleitfläche bildet, die Gleitbewegungen zwischen den beiden Lagerteilen ermöglicht. Die Erfindung betrifft ferner ein Verfahren zur Bemessung eines Bauwerks-Gleitlagers.

Bauwerks-Gleitlager sind eine spezielle Bauform eines Bauwerks-Lagers. Bauwerks-Lager, auch als Lager im Bauwesen bezeichnet, dienen ganz allgemein der definierten und möglichst zwängungsfreien Lagerung von beliebig gearteten Bauwerken, wie Brücken, Trägern, Häusern, Türmen oder Teilen hiervon. Sie ermöglichen also Relativbewegungen zwischen zwei Bauteilen des betreffenden Bauwerks. Gemäß der europäischen Norm EN 1337 sind verschiede Bauarten und Funktionsweisen bekannt. Je nach Bauart und Funktionsweise weisen die Bauwerks-Lager einen unterschiedlichen Aufbau und eine unterschiedliche Anzahl von Freiheitsgraden auf.

Bauwerks-Gleitlager, im Folgenden auch kurz als Gleitlager bezeichnet, weisen wenigstens ein erstes Lagerteil auf, an dem wenigstens ein Gleitelement befestigt ist und ein dazu relativ verschieblich angeordneten zweites Lagerteil. Das zweite Lagerteil bildet in Paarung mit der Kontaktfläche des Gleitelements des ersten Lagerteils eine Gleitfläche, die Gleitbewegungen zwischen den beiden Lagerteilen ermöglicht.

Das Gleitelement besteht üblicherweise aus einem Gleitwerkstoff. Als Gleitwerkstoff werden verschiedene Kunststoffe mit niedriger Reibung wie etwa PTFE, UHMWPE oder Polyamid verwendet. Auch Verbundwerkstoffe, wie die in der EN 1337-2 genannten CM1 und CM2, kommen zum Einsatz.

Damit in der Gleitfläche insgesamt die gewünschten Eigenschaften in Bezug auf das Gleitverhalten, Haltbarkeit etc. erreicht werden, weist üblicherweise die Oberfläche des zweiten Lagerteils eine spezielle Oberflächenvergütung, wie etwa eine Hartverchromung auf, wenn es direkt mit dem Gleitelement zusammenwirkt. Das zweite Lagerteil kann aber auch insofern indirekt mit dem Gleitelement zusammenwirken, als es seinerseits noch ein Gegengleitelement aufweist. Dieses kann ein sogenanntes Gleitblech z.B. aus austenitischem Stahlblech sein, das auf das zweite Lagerteil aufgebracht worden ist und das seinerseits eine definierte Oberflächenqualität aufweist.

Die EN 1337 enthält Regelungen wie das Gleitelement, das etwaige Gegengleitelement sowie die dazugehörigen Trägerelemente und Lagerteile auszuführen sind. Angestrebt wird ein möglichst geringer Gleitwiderstand bei einer Relativverschiebung oder -verdrehung der durch das Gleitlager voneinander getrennten Bauwerke oder Bauwerksteile. Für die Bemessung des Gleitlagers sowie des Bauwerks wird jedoch in der Regel auf der sicheren Seite liegend ein oberer Bemessungswert des Reibkoeffizienten herangezogen. Der Gleitwiderstand wird hierbei über den Reibkoeffizienten definiert. Der Reibkoeffizient ist der Quotient aus der für die Bewegung erforderlichen Kraft in Richtung der Gleitbewegung und der rechtwinklig zur Gleitfläche wirkenden Kraft

Neben der beweglichen Lagerungen von Bauwerken werden Gleitlager seit einiger Zeit auch zur Isolation von Bauwerken oder Teilen davon von weiteren umgebenden Bauwerken und/oder vom Untergrund verwendet. Ziel einer solchen Isolation kann beispielsweise die Vermeidung von Bauwerksschäden in Folge von Erdbeben sein. Eine besondere Bau-art eines solchen der Isolation dienenden Gleitlagers ist das sogenannte Gleitpendellager. Bei diesem ist die wenigstens eine Gleitfläche gekrümmt ausgeführt. Die Krümmung der Gleitfläche führt dazu, dass bei horizontaler Auslenkung rückstellende Kräfte erzeugt werden. Regelungen für derartige Lager sind zum Beispiel in der europäischen Norm EN 15129 gegeben.

Soll in einem solchen Anwendungsfall nicht nur die Bewegung des Bauwerkes ermöglicht werden, sondern auch die in Folge des Erdbebens eingeleitete Energie dissipiert werden, dann wird ein bestimmtes, zahlenmäßig definiertes Reibungsverhalten in der Gleitfläche gefordert. Denn bei Gleitlagern kann die Dissipation von Energie durch die während der Bewegung auftretende Reibung zwischen den Lagerteilen in der Gleitfläche erfolgen. Neben dem gewünschten Effekt, Energie zu disspiperen, bewirkt die Reibung gleichzeitig, dass auf das Bauwerk Reaktionskräfte ausgeübt werden. Mit steigender Reibung steigen sowohl die Reaktionskräfte wie auch die dissipierte Energie an. Da einerseits hohe Reaktionskräfte zu vermeiden sind, andererseits jedoch die Vernichtung einer großen Energiemenge gewünscht ist, muss zwischen den gegenläufigen Auswirkungen ein bauwerksbezogenes Optimum gesucht werden.

Maßgebliche Kenngröße für die Reibung zwischen zwei sich bewegenden Körpern ist wie erwähnt die Reibungszahl. Nach dem heutigen Stand der Technik wird die Reibungszahl wesentlich durch die Wahl des Gleit- und Gegenwerkstoffes, die Art der Schmierung der Gleitfläche sowie die Kontaktpressung gesteuert. Entsprechende Gleitlager werden in den Dokumenten WO 2009/010487 A1 und JP 2007 016905 A beschrieben.

Problematisch bei Gleitlagern nach dem Stand der Technik ist, dass je nach gewünschtem Einsatzzweck und der dafür gewünschten bzw. geforderten minimalen oder maximalen Reibung das Gleitlager für den jeweiligen Einsatzzweck individuell ausgelegt werden muss. Vor dem Hintergrund der teilweise gegenläufigen Auslegungsziele ist die Bemessung und Anpassung der Lager nicht einfach. So hat es zum Beispiel schon Versuche mit Gleitpendellager gegeben, bei denen in einer ersten Gleitfläche ein erster geschmierter Gleitwerkstoff verwendet wurde und in einer zweiten Gleitfläche ein ungeschmierter zweiter Gleitwerkstoff. Der erste Gleitwerkstoff soll die möglichst zwängungsfreie Bewegung der Lagerteile während des normalen Gebrauchszustands sicherstellen, also eine geringe Reibung erzeugen. Der zweite Gleitwerkstoff soll für eine große Energiedissipation im Erdbebenfall sorgen, also eine große Reibung aufweisen.

Die Abstimmung der Gleiteigenschaften und Verwendung unterschiedlicher Gleitwerkstoffe ist jedoch nicht trivial. Zum einen liefert die EN 1337-2 nur Vorgaben für die Verwendung von PTFE, das in bestimmter Art und Weise geschmiert werden muss. Will man einen anderen Gleitwerkstoff verwenden oder die Schmierung modifizieren, müssen spezielle Eignungsversuche durchgeführt werden, die sehr aufwendig und teuer sind. Auch ist die Verwendung unterschiedlicher Gleitwerkstoffe, Schmierungen, Oberflächenqualitäten etc. in der Fertigung äußerst aufwendig.

Aufgabe der vorliegenden Erfindung ist es daher ein hinsichtlich seiner Reibungseigenschaften leicht anpassbares Bauwerks-Gleitlager zur Verfügung zu stellen, das möglichst einfach und wirtschaftlich herzustellen ist.

Die Lösung dieser Aufgabe gelingt erfindungsgemäß mit der Bauwerks-Gleitlager Erfindung nach Anspruch 1 sowie dem Bemessungsverfahren nach Anspruch 17. Vorteilhafte Weiterentwicklungen des Gleitlagers bzw. des Bemessungsverfahrens sind in den Unteransprüchen beschrieben.

Das erfindungsgemäße Bauwerks-Gleitlager zeichnet sich also dadurch aus, dass die Form der Kontaktfläche des Gleitelementes so gestaltet ist, dass sich eine gewünschte Reibungszahl in der Gleitfläche einstellt. Der Erfindung liegt dabei die Erkenntnis zugrunde, dass sich die Reibungszahl bei gleichem Gleitmaterial mit der Form der Kontaktfläche des Gleitelementes ändert und man dieses Verhalten zur gezielten Einstellung der Reibungszahl und somit auch der Reibung des Bauwerks-Gleitlager verwenden kann. Das Reibverhalten des Gleitlagers wird also nicht wie bislang üblich durch die Wahl des Gleit-und Gegenwerkstoffes, der Art der Schmierung der Gleitfläche sowie der Kontaktpressung eingestellt. Vielmehr wird durch eine gezielte Formgebung der Kontaktfläche des Gleitelementes die Reibungszahl in gewünschter Weise und damit durch einen weiteren, maßgebenden Parameter beeinflusst. Denn Versuche der Anmelderin haben gezeigt, dass in Bauwerks-Gleitlagern unterschiedliche Verformungsverhalten des Gleitwerkstoffes im Zentrum der Kontaktfläche und am Rand der Kontaktfläche den Gleitwiderstand einstellen und man diesen Effekt gezielt nutzen kann, um ein gewünschtes Reibungsverhalten in der Gleitfläche einzustellen.

In einer vorteilhaften Weiterbildung des Bauwerksgleitlagers ist die gewünschte Reibungszahl in der Gleitfläche in Abhängigkeit der Umfangslänge und / oder der Grundrißform der Kontaktfläche und / oder der Gleitspalthöhe und / oder der Ausrichtung der Kanten der Kontaktfläche in Bezug auf die Gleitrichtung eingestellt. So ist es denkbar, dass Kanten, welche parallel zur Gleitrichtung verlaufen, einen geringeren Einfluss auf die Reibungszahl haben, als solche Kanten welche orthogonal zur Reibungsrichtung verlaufen. Entsprechend bewirkt eine definierte Ausrichtung der freien Mantelfläche in Richtung der verschiedenen Freiheitsgrade des Bauwerks-Gleitlagers, dass unterschiedliche Reibungszahlen und somit Reibungswiderstände in Richtung der verschiedenen Freiheitsgrade vorhanden sind. Darüber hinaus wird erfindungsgemäß erreicht, den Einfluss der individuellen Formgebung des Gleitflächengrundrisses auf die Reibungszahl über einen Formbeiwert darzustellen. Dabei kann es eine Rolle spielen, ob der Gleitflächengrundriss eher rundliche Umrisskanten aufweist oder spitze Ecken hat ebenso wie die jeweilige Anzahl der Kanten sowie deren der Abstand und Ausrichtung zum Gleitflächenschwerpunkt. Ebenso kann die Gleitspalthöhe genutzt werden, um die Reibungszahl in der Gleitfläche zu beeinflussen. So ist es beispielsweise denkbar, dass sich für große Gleitspalte aufgrund des Fließens des Gleitmaterials an der Kante der Gleitfläche die Reibungszahl erniedrigt, jedoch auch bei sehr niedrigen Gleitspalten sich der Effekt einer Beeinflussung der Reibungszahl nur teilweise einstellt. Folglich kann je nach gewünschtem Effekt auf die Reibungszahl eine optimale Gleitspalthöhe existieren.

Da Gleitelemente von Bauwerks-Gleitlagern nicht beliebig ausgeformt werden können, ist die Einstellung der Reibungszahl über eine Gestaltung der Form des Gleitelements vor allem über eine Einstellung des Verhältnisses von Kontaktfläche zur freier Mantelfläche möglich. Unter freier Mantelfläche ist hierbei die Fläche zu verstehen, die sich im Gleitspalt zwischen dem ersten Lagerteil und dem zweiten Lagerteil an der Umfangsseite des Gleitelementes frei verformen kann, also offen liegt. Im Fall einer gekammerten Lagerung einer vollflächig an der Gegenseite anliegenden Gleitscheibe ist das der Umfang multipliziert mit der Höhe der Gleitscheibe abzüglich der Tiefe der Kammerung. Unter Kontaktfläche ist der Anteil der Oberfläche des Gleitelements zu verstehen, der mit dem zweiten Lagerteil insgesamt in Berührung kommt. Vergrößert man bei gleichbleibender Kontaktfläche die freie Mantelfläche, indem man bei gleichbleibender Höhe des Gleitspaltes den Umfang der Kontaktfläche vergrößert, steigt die Reibung.

Durch die gezielte Beeinflussung des Reibverhaltens des Gleitlagers über die Formgebung des Gleitelementes kann man auf sehr einfache Weise das Gleitlager an unterschiedliche Aufgaben und Einsatzzwecke anpassen. Dies ohne aufwendige Eignungstests oder spezielle Zulassungen beantragen zu müssen. Vielmehr ist es so möglich mit ein-und demselben Gleitmaterial, für das man zum Beispiel bereits eine Zulassung als Gleitmaterial erwirkt hat, unterschiedliche Aufgaben zu lösen. So kann man mit dem Material zum einen normale Gleitlager bauen, oder durch eine Vergrößerung des Anteils der Mantelfläche des Gleitelementes einen Erdbebenisolator, der eine im Vergleich erhöhte Reibung in der betreffenden Gleitfläche aufweisen soll. Zudem hat die Erfindung den Effekt, dass es in der Herstellung nicht zu Lagerhaltung unterschiedlichster Materialien mehr kommen muss. Das reduziert die Lagerhaltungskosten, verhindert Verwechslungen bei der Herstellung der Lager und bringt Vorteile im Einkauf. Das erfindungsgemäße Lager lässt sich also erheblich einfacher und kostengünstiger herstellen.Erfindungsgemäß ist die Reibungszahl in der Gleitfläche als Funktion eines das Verhältnis von Kontaktfläche zu freier Mantelfläche des Gleitelements berücksichtigenden Formfaktors eingestellt. Der Formfaktor ist dabei ein Quotient der Kontaktfläche zur freien Mantelfläche, wobei die freie Mantelfläche wie bereits erwähnt die Länge des Umfanges der Kontaktfläche multipliziert mit der Höhe des Gleitspaltes ist. Zweckmäßiger Weise ist die Größe der Kontaktfläche des Gleitelementes in Abhängigkeit des Formfaktors so optimiert, vorzugsweise minimiert worden, dass die gewünschte Reibungszahl in der Gleitfläche ohne eine Änderung der Pressung erreicht wird. Hierdurch können die Bauwerks-Gleitlager für den jeweiligen Einsatzzweck kleiner und damit wirtschaftlicher gefertigt werden.

Insbesondere wenn das Gleitlager zur Erdbebenisolation verwendet werden soll, ist es zweckmäßig, wenn die Form des Gleitelements so gestaltet ist, dass die Größe der Reibungszahl in der Gleitfläche in Abhängigkeit des Formfaktors maximiert worden ist. Für die praktische Anwendung bedeutet dies, dass durch eine Vergrößerung der freien Mantelfläche bei gleicher Kontaktfläche das Bauwerks-Gleitlager eine größtmögliche Reibungszahl und somit auch eine größtmögliche Dissipationskapazität erzielt werden kann. Die Vergrößerung der freien Mantelfläche kann beispielsweise durch eine Veränderung der Form der Kontaktfläche erfolgen. Beispielsweise kann die Kontaktfläche eine ovale oder sternförmige Form oder jede andere denkbare Form haben, die eine größere freie Mantelfläche zur Folge hat.

Bevorzugt ist das Bauwerks-Gleitlager in derartigen Anwendungsfällen als Kalottenlager, insbesondere als Gleitpendellager ausgebildet. Charakteristisch für Kalottenlager ist, dass diese wenigstens eine gekrümmte Gleitfläche aufweisen, während Gleitpendellager mehrere gekrümmte Gleitflächen aufweisen. So ist es denkbar, dass die Reibungszahl in unterschiedlichen Gleitflächen gezielt unterschiedlich aber aus dem gleichen Gleitmaterial bestehend wie zuvor beschrieben eingestellt wird. So kann eine Gleitfläche für den normalen Gebrauchszustand als herkömmliches Gleitlager mit geringer Reibung ausgelegt sein, während eine zweite Gleitfläche vor allem mit Blick auf ein Erdbeben mit einer erhöhten Reibungszahl, also einem erhöhten Dissipationsvermögen, ausgelegt ist.

Weiterbildend ist die Kontaktfläche des Gleitelements aus zwei, insbesondere mehr als vier Teil-Kontaktflächen gebildet. Die erfindungsgemäße Unterteilung der Kontaktfläche in Teil-Kontaktflächen bewirkt eine Vergrößerung der freien Mantelfläche des Gleitelementes. Eine derartige Unterteilung kann durch mehrere Gleitelemente oder durch Kerbung oder dergleichen erfolgen. Die Unterteilung erleichtert dabei die Fertigung da sie relativ leicht erzeugt werden kann und wenig an der Grundgeometrie des Gleitelementes bzw. seiner Ausgangsmaterialien verändert werden muss (meist Platten bestimmter Dicke aus einem Gleitwerkstoff).

Eine vorteilhafte Weiterbildung des Bauwerks-Gleitlagers sieht vor, dass das Gleitelement wenigstens eine Gleitscheibe aufweist, wobei die Kontaktfläche aus wenigstens einem Teil der Oberfläche der wenigstens einen Gleitscheibe gebildet wird. Das Gleitelement weist also eine an und für sich bekannte, herkömmliche Gleitscheibe auf bzw. kann sogar ganz aus dieser bestehen.

In diesem Fall ist es zweckmäßig, wenn wenigstens ein Teil der Oberfläche der wenigstens einen Gleitscheibe durch wenigstens eine Ausnehmung in Teil-Kontaktflächen gegliedert ist. So kann die Reibung im Vergleich zu einer herkömmlichen Gleitscheibe gleichen Materials vergrößert werden. Eine solche Ausnehmung kann beispielsweise eine oder mehrere Nuten sein, welche in einen Teil der Oberfläche der wenigstens einen Gleitscheibe aufgebracht wird. Das Aufbringen dieser einen oder mehreren Nuten kann beispielsweise durch Einfräsen in einen Teil der Oberfläche der wenigstens einen Gleitscheibe erfolgen.

Das Aufbringen von Ausnehmungen in das Gleitmaterial ist ein besonders wirtschaftliches Verfahren, um Teil-Kontaktflächen zu erzeugen. In der Regel beträgt die Breite der Ausnehmung zwischen wenigen Millimetern und der doppelten Dicke des ersten Lagerteils, um einerseits eine ausreichende Stützung des Gleitwerkstoffes zu gewährleisten und andererseits die Pressung gleichmäßig in die angrenzenden Bauteile zu verteilen. Die Aufteilung wenigstens eines Teils der Oberfläche der wenigstens einen Gleitscheibe bewirkt wiederum, dass sich die freie Mantelfläche des Gleitelementes im Verhältnis zur Kontaktfläche vergrößert und somit der Formfaktor beeinflusst wird.

Grundsätzlich kann die wenigstens eine Ausnehmung beliebig geformt sein, um beliebige Teil-Kontaktflächen zu erzeugen. Bevorzugt ist die Ausnehmung aber derart gestaltet, dass sie länglich ist oder die Form eines Kreises, Ringes oder eines Segmentes von einem der beiden aufweist. Hierzu sind Fertigungsverfahren wie Drehen oder Fräsen wegen ihrer großen Flexibilität geeignet. Alternativ kann die Ausnehmung aber auch bereits bei der Herstellung der Gleitelemente etwa beim Gießen oder Sinterpressen in Plattenform erzeugt werden.

Insbesondere wenn das Gleitlager, beziehungsweise das Gleitmaterial der Gleitscheibe hohen Pressungen ausgesetzt ist, ist es zweckmäßig, dass in wenigstens eine Ausnehmung wenigstens ein Abstandshalter eingelegt wird. Das Einlegen eines Abstandhalter in die Ausnehmung gewährleistet, dass das Gleitmaterial der Gleitscheibe am Rand der Teil-Kontaktflächen unter der Belastung nicht seitlich ausweichen kann. In Analogie zur gekammerten Halterung des Gleitelementes im ersten Lagerteil ist die Gleitscheibe nach innen gekammert. Durch die innere Kammerung lassen sich bei gleicher Last die Gleitscheiben und das Bauwerks-Gleitlager kleineren herstellen, oder bei gleicher Größe der Gleitscheibe höhere Lasten mit dem Bauwerks-Gleitlager abtragen.

In einer vorteilhaften Weiterbildung des Bauwerks-Gleitlagers weist das Gleitelement eine Vielzahl von Gleitscheiben auf. Dies ermöglicht es, das Gleitelement einerseits aus gleich und/oder verschieden geformten Gleitscheiben zusammenzusetzen und andererseits auch das Gleitelement durch den Einsatz von Gleitscheiben aus verschiedenen Gleitmaterialien variabel aufzubauen. Ferner wird es auch möglich, große und / oder individuell geformte Gleitelemente aus einer Vielzahl von standardisierten Gleitscheiben zusammenzusetzen, wodurch die Produktion des erfindungsgemäßen Bauwerk-Gleitlagers besonders wirtschaftlich wird.

Bevorzugt weist die Kontaktfläche und / oder wenigstens eine Teil-Kontaktfläche die Form eines Kreises, eines Ringes oder eines Segmentes von einem der beiden auf. Diese Formgebung hat den Vorteil, dass keine bzw. nur wenig Ecken entstehen, die zu einer punktuellen Erhöhung der Reibung führen würden. Diese Formgebung hilft also den Verschleiß gering zu halten.

Eine vorteilhafte Weiterbildung des Bauwerk-Gleitlagers sieht vor, dass das Gleitelement und / oder wenigstens eine Gleitscheibe des Gleitelementes im ersten Lagerteil gekammert gehalten ist. Durch die gekammerte Haltung des Gleitelementes oder der wenigstens einen Gleitscheibe wird ein Fließen des Gleitmaterials in Folge der aus den Bauwerkslasten entstehenden Pressung reduziert. Die Art der Kammerung hat zudem Einfluss auf die Größe der freien Mantelfläche, da diese abhängig ist von der Höhe des Gleitspaltes, anders gesagt der Höhe des Überstands des Gleitelementes über den ersten Lagerteil.

Unter Umständen kann es zweckmäßig sein, dass wenigstens ein Abstandhalter zwischen zwei Gleitscheiben angeordnet ist. Dieser Abstandshalter ist in der Regel zwischen wenigen Millimetern und der doppelten Dicke des ersten Lagerteils breit. Hierdurch wird gewährleistet, dass einerseits eine ausreichende Stützung oder auch innere Kammerung des Gleitwerksstoffs gegen Fließen gewährleistet ist. Andererseits wird sichergestellt, dass die Pressung gleichmäßig in die angrenzenden Bauteile verteilt wird.

Bevorzugt besteht das Gleitelement und / oder wenigstens eine Gleitscheibe zumindest teilweise aus einem Gleitmaterial, insbesondere einem thermoplastischen Gleitmaterial. Thermoplastische Materialien lassen sich gut in Formen gießen, die zum Beispiel schon Stege zur Erzeugung von Ausnehmungen zur Unterteilung in Teil-Kontaktflächen aufweist.

Besonders bevorzugt besteht das Gleitelement und / oder wenigstens eine Gleitscheibe zumindest teilweise aus PTFE, UHMWPE, Polyamid und / oder einer Kombination wenigstens zweier solcher Materialen. Dabei kann sowohl das Gleitelement als auch die wenigstens eine Gleitscheibe aus den genannten Werkstoffen in Reinform bestehen oder alternativ aus einer Werkstoffmischung zweier oder mehrerer solcher Materialen bestehen. Denkbar ist auch, dass mehrere Gleitscheiben aus verschiedenen solcher Materialen in Reinform und / oder verschiedenen Mischungen solcher Materialien zu einem Gleitelement zusammengesetzt werden.

Das erfindungsgemäße Verfahren zur Bemessung eines Bauwerks-Gleitlagers sieht vor, dass die Reibungszahl in der Gleitfläche unter Berücksichtigung eines Formfaktors eingestellt wird. Anders als im Stand der Technik, wo die Reibungszahl und somit auch die Reibung des Bauwerks-Gleitlagers durch die Wahl des Gleit- und Gegenwerkstoffes, der Art der Schmierung der Gleitfläche sowie der Kontaktpressung beeinflusst werden, beruht der erfindungsgemäße Ansatz darauf, dass die Reibung gezielt durch Beeinflussung der Form der Kontaktfläche also nicht durch Beeinflussung von Material oder Kraftgrößen sondern durch Beeinflussung geometrischer Größen eingestellt wird. Entsprechend lässt sich durch Formung der Kontaktfläche des Gleitelementes die Reibungszahl auf eine verblüffend einfache und sehr flexible Art und Weise beeinflussen.

Bevorzugt erfolgt die Bemessung des Bauwerks-Gleitlagers dadurch, dass die gewünschte Reibungszahl in der Gleitfläche in Abhängigkeit der Umfangslänge und / oder der Grundrißform der Kontaktfläche und / oder der Gleitspalthöhe und / oder der Ausrichtung der Kanten der Kontaktfläche in Bezug auf die Gleitrichtung eingestellt wird. Für die Berechnung der Reibungszahl ist es denkbar, dass in der Berechnungsmethodik der Reibungszahl der Einfluss aus der Umfangslänge, Grundrißform der Kontaktfläche, Gleitspalthöhe und Ausrichtung der Kanten zur Verschiebungsrichtung über individuelle Beiwerte Rechnung getragen wird. Das erfindungsgemäße Verfahren sieht vor, dass die Reibungszahl in der Gleitfläche als Funktion eines das Verhältnis von Kontaktfläche zu freier Mantelfläche des Gleitelements berücksichtigenden Formfaktors eingestellt wird. Wie bereits obenstehend erwähnt ist der Formfaktor ein Quotient aus der Kontaktfläche zur freien Mantelfläche.

Weiterbildend wird die Größe der Kontaktfläche des Gleitelements in Abhängigkeit des Formfaktors so optimiert, vorzugsweise minimiert, dass die gewünschte Reibungszahl in der Gleitfläche erreicht wird. Hierdurch können die Bauwerks-Gleitlager für den jeweiligen Einsatzzweck kleiner und gleichzeitig wirtschaftlicher gefertigt werden.

Alternativ oder ergänzend kann die Größe der Reibungszahl in der Gleitfläche in Abhängigkeit des Formfaktors maximiert werden. Dies macht vor allem dann Sinn, wenn das Lager zur Erdbebenisolation ausgelegt werden soll.

Bevorzugt erfolgt die Bemessung so, dass die Werkstoffpaarung in der Gleitfläche bei der Optimierung konstant gehalten wird. Dies ermöglicht eine vereinfachte Bemessung der Gleitlager.

Nachfolgend wird die Erfindung anhand von in den Zeichnungen dargestellten Ausführungsbeispielen näher erläutert. Darin zeigen schematisch:

Fig. 1　einen Schnitt durch ein erstes Ausführungsbeispiels eines erfindungsgemäßen Bauwerks-Gleitlagers mit ebener Gleitfläche;

Fig. 2　einen Ausschnitt aus einem Schnitt durch ein zweites Ausführungsbeispiel eines erfindungsgemäßen Gleitlagers mit gekrümmter Gleitfläche;

Fig. 3　einen Ausschnitt aus einem Schnitt durch ein drittes Ausführungsbeispiel eines erfindungsgemäßen Gleitlagers;

Fig. 4　einen Ausschnitt aus einem Schnitt durch ein viertes Ausführungsbeispiel eines erfindungsgemäßen Gleitlagers;

Fig. 5　einen Schnitt durch ein fünftes als Gleitpendellager ausgebildeten Ausführungsbeispiel eines erfindungsgemäßen Gleitlagers;

Fig. 6　den Schnitt A-A des in Fig. 5 gezeigten Gleitpendellagers;

Fig. 7　die Draufsicht auf die Kontaktfläche einer Gleitscheibe in einer sechsten Ausführungsform;

Fig. 8　die Draufsicht auf die Kontaktfläche einer Gleitscheibe in einer siebten Ausführungsform;

Fig. 9　ein Messdiagramm mit Darstellung der Reibungszahl Y in Abhängigkeit der Pressung X; und

Fig. 10　ein Messdiagramm mit Darstellung der Reibungszahl Y in Abhängigkeit des Produkts aus Formfaktor S und Pressung.

In den Figuren werden gleiche Bezugszeichen für gleichartige Teile verwendet.

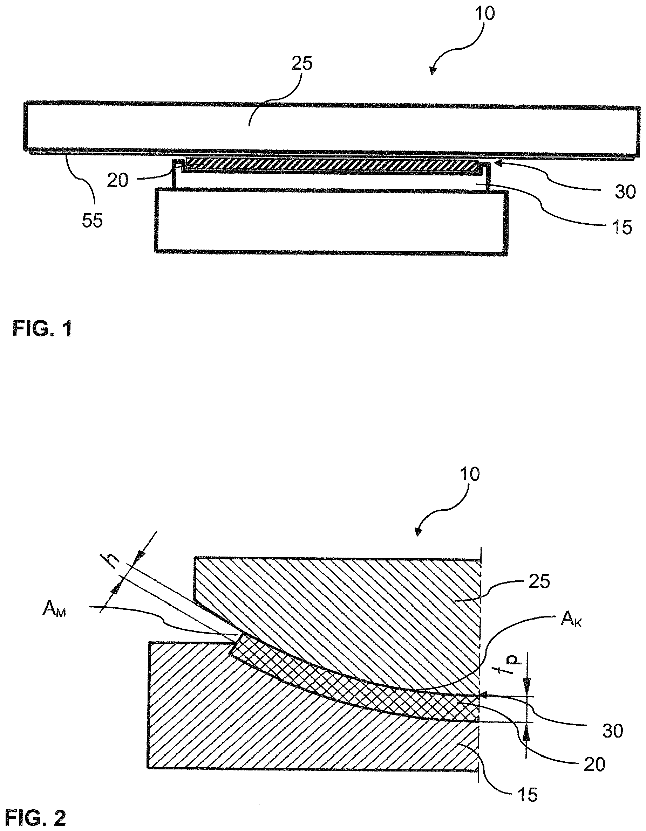

Fig. 1 zeigt ein erstes Ausführungsbeispiel eines erfindungsgemäßen Bauwerks-Gleitlagers 10. Dieses entspricht im Aufbau grundsätzlich den in den EN 1337 beschriebenen Bauwerks-Gleitlagern. Es weist ein erstes Lagerteil 15, ein daran befestigtes Gleitelement 20 und ein zweites Lagerteil 25 auf. Das zweite Lagerteil 25 weist wiederum eine Gegenfläche 55 auf, die vorliegend als Hartchromschicht ausgeführt ist, aber auch aus einem Gleitblech aus austenitischen Stahl oder dergleichen bestehen könnte. Das erste Lagerteil 15 und das zweite Lagerteil 25 sind zueinander verschiebbar ausgeführt, so dass eine Gleitfläche 30 aus der Paarung der vorliegend ebenen Oberflächen des Gleitelements 20 und der Gegenfläche 55 gebildet wird. Das Gleitelement 20 besteht vorliegend aus einer ebene Gleitscheibe aus einem Gleitwerkstoff und ist mittels Kammerung im ersten Lagerteil 15 gehalten. Zusätzlich ist jedoch erfindungsgemäß die Geometrie der Gleitplatte 20 im hier nicht dargestellten Grundriss sternförmig gestaltet, so dass sich eine vergleichsweise große Umfangsfläche bezogen auf die Kontaktfläche einstellt, wodurch sich eine im Vergleich zu einer kreisförmigen Gleitplatte erhöhte Reibungszahl in der Gleitfläche 30 eingestellt worden ist.

In Fig. 2 wird ein schematischer Schnitt durch ein zweites Ausführungsbeispiel eines erfindungsgemäßen Bauwerks-Gleitlagers 10 mit einer gekrümmten Gleitfläche 30 gezeigt. Auch dieses Ausführungsbeispiel weist ein erstes Lagerteil 15, ein plattenförmiges Gleitelement 20 und ein dazu verschieblichen zweiten Lagerteil 25 auf. Das Gleitelement 20 steht mit dem zweiten Lagerteil 25 über die Kontaktfläche $A_K$ des Gleitelementes 20 mit dem zweiten Lagerteil 25 in Kontakt. Da auch hier das Gleitelement 20 im ersten Lagerteil 15 gekammert gehalten ist, ergibt sich die freie Mantelfläche $A_M$ aus dem Produkt der Umfangslänge mit der Höhe des Gleitspalts h, also der Dicke des plattenförmigen Gleitelements 20 $t_P$ abzüglich der Tiefe der Kammerung.

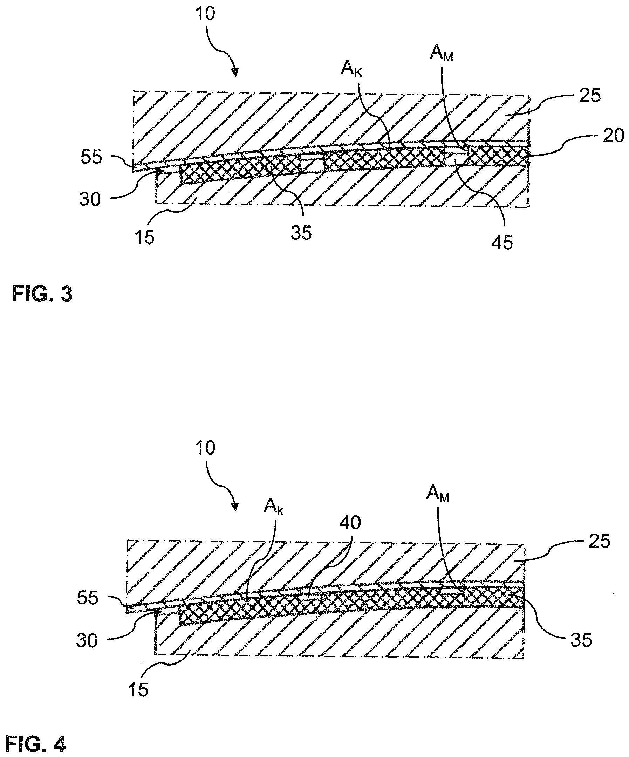

Fig. 3 ist ein Ausschnitt aus einem Schnitt durch ein drittes erfindungsgemäßes Bauwerks-Gleitlager 10. Zu erkennen ist das erste Lagerteil 15 und das zweite Lagerteil 25 mit einer Gegenfläche 55. Das Gleitelement 20 setzt sich in der dargestellten ersten Ausführungsform aus mehreren Gleitscheiben 35 zusammen. Die Gleitscheiben 35 werden im ersten Lagerteils 15 gekammert gehalten. Damit dies funktioniert, befinden sich zwischen den Gleitscheiben 35 des Gleitelementes 20 Abstandshalter 45, welche die Gleitscheiben zueinander auf konstantem Abstand halten und gleichzeitig für eine innere Kammerung zwischen den Gleitscheiben 35 sorgen. Auf diese Weise wird in der Gleitfläche 30 die Kontaktfläche $A_K$ unterbrochen und der Anteil der freien Mantelfläche $A_M$ gegenüber der Kontaktfläche $A_K$ des Gleitelementes vergrößert. So kann über die geometrische Ausgestaltung der Oberfläche des Gleitelementes 20 Einfluss auf den Formfaktor S genommen werden. Infolge dessen erhöht sich bei einem Gleitelement mit einer Vielzahl an Gleitscheiben 35 und Abstandshaltern 45 die Reibungszahl Y im Vergleich zu einer durchgehenden Gleitscheibe. Alternativ zu den eingelegten Abstandhaltern 45 kann auch ein Steg materialschlüssig auf dem ersten Lagerteil 15 vorhanden sein.

Fig. 4 ist eine Detailansicht eines Schnitts durch ein viertes Ausführungsbeispiel eines Bauwerks-Gleitlagers 10 mit einem Gleitelement, bestehend aus einer einzelnen gekrümmten Gleitscheibe 35 deren Oberseite durch Ausnehmungen 40 in mehrere Teil-Kontaktflächen gegliedert ist. Auf der Oberfläche der Gleitscheibe 35 sind Ausnehmungen 40 aufgebracht, sodass diese die Oberfläche der Gleitscheibe 35 unterbrechen. Auf diese Weise wird in der Gleitfläche 30 die Kontaktfläche $A_K$ gegliedert und die Größe der freien Mantelfläche AM der Gleitscheibe 35 bzw. des Gleitelementes 20 vergrößert. Auf diese Art und Weise kann über die geometrische Ausgestaltung der Oberfläche der Gleitscheibe 35 bzw. des Gleitelementes 20 Einfluss auf den Formfaktor S genommen werden. Infolge dessen erhöht sich die Reibungszahl Y.

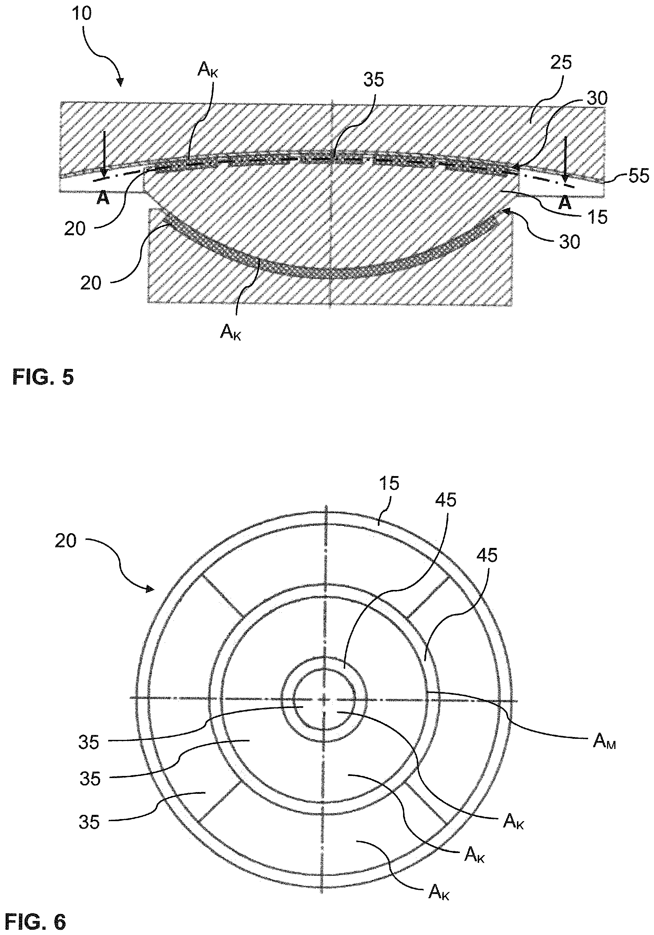

In Fig. 5 ist ein Gleitpendellager dargestellt, welches zwei Gleitflächen 30 und zwei Gleitelemente 20 mit jeweils einer Kontaktfläche $A_K$ aufweist. Beide Kontaktflächen der Gleitelemente 20 können so gestaltet werden, dass sich eine gewünschte Reibungszahl in den jeweiligen Gleitflächen 30 einstellt. Eins der Gleitelemente 20 besteht aus mehreren Gleitscheiben 35. Durch dieses Gleitelement 20 ist eine Schnittlinie A-A geführt, welche den Schnitt durch das Gleitelement 20 und die Gleitscheiben 35 andeutet.

Fig. 6 zeigt den in Fig. 5 angedeuteten Schnitt entlang der Linie A-A durch das Gleitelement 20. In diesem Schnitt sind mehrere Gleitscheiben 35 zu erkennen, wovon die beiden äußeren Gleitscheiben 35 eine ringförmige Gestalt haben und die innere Gleitscheibe 35 eine kreisförmige Gestalt hat. In Fig. 6 ist ebenso das erste Lagerteil 15 zu erkennen, welches die äußere Gleitscheibe 35 umfasst und kammert. Die einzelnen Gleitscheiben 35 werden darüber hinaus durch Abstandshalter 45 zueinander gleichmäßig auf Abstand gehalten. Folglich bewirken die Abstandshalter 45 eine innere Kammerung des aus den Gleitscheiben 35 zusammengesetzten Geleitelementes 20, so dass es insgesamt auf herkömmliche Weise, sprich gekammert, Im Lagerteil 15 gehalten werden kann. Der die Abstandshalter 45 überragende Teil der Gleitscheiben 35 wird als freie Mantelfläche AM wirksam und hat somit Einfluss auf den Formfaktor S. Über die abgebildete Darstellung eines Gleitelementes 20 hinaus ist es auch denkbar, dass das Gleitelement 20 nicht nur aus ring- oder kreisförmigen Gleitscheiben 35 zusammengesetzt wird. Es ist vielmehr denkbar, dass die Gleitscheiben 35 eine beliebige Form einnehmen können und ein beliebig geformtes Gleitelement 20 bilden.

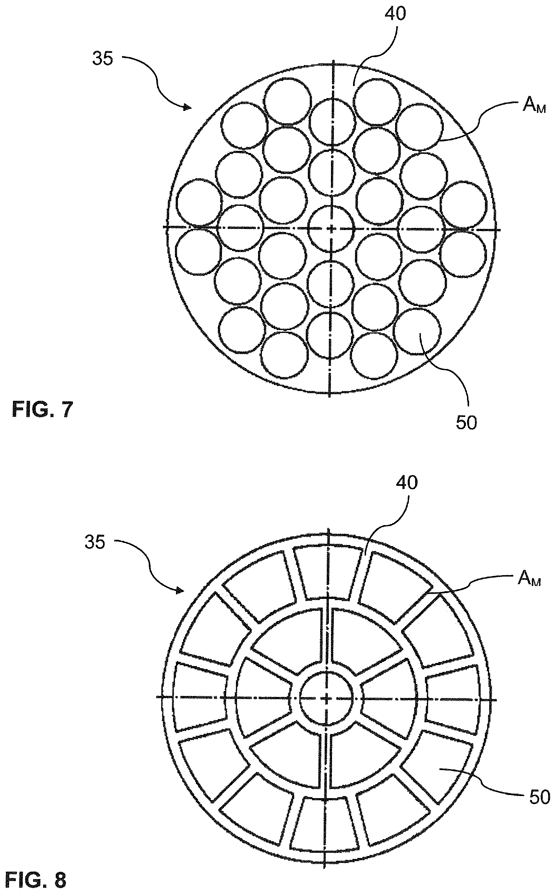

In Fig. 7 ist ein weiteres Ausführungsbeispiel eines aus einer einzigen Gleitscheibe 35 bestehenden Gleitelementes 20 dargestellt. Neben einer Variation der Umfangsform kann auch die Oberfläche der Gleitscheibe, welche als Kontaktfläche $A_K$ in der Gleitfläche 30 mit dem zweiten Lagerteil 25 in Kontakt ist, variiert werden. In Figur 7 ist eine Gleitscheibe 35 dargestellt, welche Ausnehmungen 40 aufweist, sodass die Kontaktfläche $A_K$ sich aus einer Vielzahl von Teil-Kontaktflächen 50 zusammensetzt. In dem dargestellten Ausführungsbeispiel sind die Teil-Kontaktflächen 50 kreisförmig. Dabei bildet die Summe der Teil-Kontaktflächen 50 die Kontaktfläche $A_K$ der Gleitscheibe. Ferner bewirkt das Aufbringen einer Ausnehmung 40 auf der Gleitscheibe 35, dass die Teil-Kontaktflächen 50 über die Ausnehmung hinaus hervorstehen. Hierdurch wird die freie Mantelfläche $A_M$ der Gleitscheibe 35 erhöht und der Formfaktor S so beeinflusst, dass die Reibung einer solchen Gleitplatte im Vergleich zu einer mit durchgehender Kontaktfläche erhöht ist.

Fig. 8 zeigt ein weiteres Ausführungsbeispiel einer erfindungsgemäßen Gleitscheibe 35, bei welcher die Ausnehmungen 40 in Form von geraden Nuten oder Ringen auf der Gleitscheibe 35 aufgebracht sind. Hierdurch lässt sich die Kontaktfläche $A_K$ der Gleitscheibe 35 in ringförmige Flächen und / oder Kreise einteilen, sowie auch Ringsegmente und / oder Kreissegmente ausbilden.

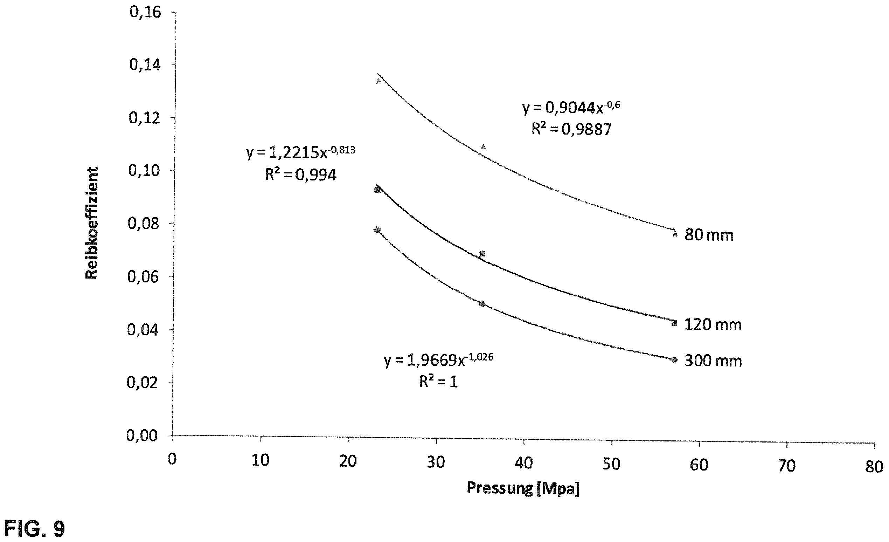

In Fig. 9 sind die Messergebnisse einer Versuchsreihe dargestellt, im Rahmen derer Bauwerks-Gleitlager 10 mit einem ungeschmierten, kreisrunden Gleitelement 20 aus dem Gleitwerkstoff UHMWPE untersucht worden sind. Im Rahmen der Versuchsreihe wurde bei einer konstanten Gleitspalthöhe einerseits der Durchmesser des kreisrunden Gleitelementes variiert, ebenso wie auch die Pressung des Gleitelementes. Dabei zeigte sich einerseits, dass ein Gleitelement mit einem Durchmesser von 80 mm bei gleicher Pressung eine deutlich höhere Reibungszahl aufweist, als ein vergleichbares kreisrundes Gleitelement mit 120 mm Durchmesser. Das kreisrunde Gleitelement mit 120 mm Durchmesser wiederum weist eine deutlich höhere Reibungszahl auf, als ein vergleichbares kreisrundes Gleitelement mit 300 mm Durchmesser. Ebenfalls ist erkennbar, dass die Reibungszahl für ein kreisrundes Gleitelement mit konstantem Durchmesser bei zunehmender Pressung sinkt. Offensichtlich beeinflusst das unterschiedliche Verformungsverhalten des Gleitwerkstoffes im Zentrum und am Rand der Kontaktfläche $A_K$ den Gleitwiderstand. Mit zunehmendem Durchmesser des kreisrunden Gleitelementes nimmt die Kontaktfläche $A_K$ überproportional zu der freien Mantelfläche $A_M$ zu. Entsprechend sinkt der Reibungskoeffizient.

Praktisch lässt sich dieses Phänomen zum Beispiel dazu nutzen, um die Reibungszahl Y für ein Gleitelement 20 bei gleicher Kontaktfläche $A_K$ zu erhöhen, indem die Kontaktfläche $A_K$ in mehrere Teil-Kontaktflächen 50 unterteilt wird, welche in Summe gleicher die gleiche Kontaktfläche $A_K$ besitzen. Da dadurch jedoch die Größe der freien Mantelfläche erhöht wird, erhöht sich entsprechend die Reibungszahl des Bauwerks-Gleitlagers.

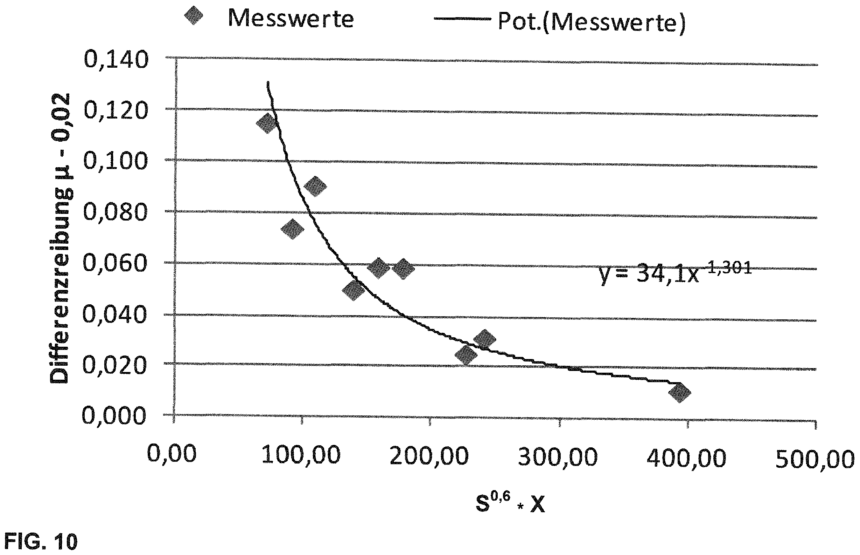

Fig. 10 zeigt den in Versuchen ermittelten Zusammenhang zwischen der Reibungszahl und dem Formfaktor S bei einer konstanten Pressung X, wobei die Abszisse das Produkt aus Formfaktor S hoch 0,6 multipliziert mit der Pressung X zeigt. In den Versuchen zeigte sich, dass mit steigendem Formfaktor, also einem wachsenden Anteil der Kontaktfläche $A_K$ im Verhältnis zur freien Mantelfläche $A_M$ die Reibungszahl Y sinkt. Die Versuchsergebnisse zeigen, dass die Reibungszahl Y mit ausreichender Genauigkeit als Funktion der Pressung und des Formfaktors S und der Pressung X für das untersuchte UHMWPE zum Beispiel wie folgt angegeben werden kann.

$$Y = 34 * S^{-0,78} * X^{-1,3} + 0,02$$

In der aufgezeigten Formel ist der Formfaktor S dimensionslos. Die Pressung X ist jedoch aufgrund des Exponenten dimensionsbehafte. Der dargestellte Zusammenhang erfordert daher die Eingabe der Pressung in [N/mm$^2$]. Der Formfaktor S wird wie folgt berechnet (U ist die Umfangslänge der Kontaktfläche A$_K$):

$$S = A_K ./. A_M = A_K ./. (U * h)$$

Die Auswirkung des Formfaktors zeigt sich, wenn man ein kreisrundes Gleitelement mit dem Durchmesser D1 durch vier Scheiben mit dem Durchmesser D2 ersetzt, wobei gilt, dass D2 = ½ D1 ist.

Es stellt sich heraus, dass bei identischer Kontaktfläche A$_K$ der Formfaktor durch die Aufteilung in vier Einzelscheiben halbiert wird. Im vorliegenden praktischen Beispiel kann durch eine derartige Aufteilung die Reibung in der Gleitfläche um bis zu 60 % ohne Veränderung der Werkstoffeigenschaften gesteigert werden, oder dieselbe Reibungszahl bei einer nahezu doppelten Pressung in Folge einer Reduktion der Kontaktfläche A$_K$ erreicht werden. Dies ermöglicht eine höhere Energiedissipation bei Bauwerks-Gleitlager. Alternativ kann dieser Effekt dazu genutzt werden, die Gleitkontaktfläche A$_K$ bei gleicher Reibungszahl wesentlich zu reduzieren und so das Bauwerks-Gleitlager wirtschaftlicher zu machen.

## Bezugszeichenliste

| | |
|---|---|
| 10 | = Bauwerk-Gleitlager |
| 15 | = erstes Lagerteil |
| 20 | = Gleitelement |
| 25 | = zweites Lagerteil |
| 30 | = Gleitfläche |
| 35 | = Gleitscheibe |
| 40 | = Ausnehmung |
| 45 | = Abstandhalter |
| 50 | = Teil-Kontaktfläche |
| 55 | = Gegenfläche |

| | |
|---|---|
| Y | = Reibungszahl |
| A$_K$ | = Kontaktfläche |
| AM | = freie Mantelfläche |
| S | = Formfaktor |
| h | = Höhe des Gleitspaltes |
| X | = Pressung |
| T$_P$ | = Dicke des Gleitelementes 25 oder der Gleitscheibe 35 |

## Patentansprüche

1. Bauwerks-Gleitlager (10) mit wenigstens einem ersten Lagerteil (15) an dem wenigstens ein Gleitelement (20) befestigt ist und einem dazu relativ verschieblich angeordneten zweiten Lagerteil (25), welches in Paarung mit einer Kontaktfläche (A$_K$) des Gleitelements (20) eine Gleitfläche (30) bildet, die Gleitbewegungen zwischen den beiden Lagerteilen (15, 25) ermöglicht,
**dadurch gekennzeichnet, dass**
die Kontaktfläche (A$_K$) in mehrere Teilkontaktflächen unterteilt ist, und dadurch die Form der Kontaktfläche (A$_K$) des Gleitelements (20) so gestaltet ist, dass sich eine gewünschte Reibungszahl (Y) in der Gleitfläche (30) einstellt, wobei die Reibungszahl (Y) in der Gleitfläche (30) als Funktion eines das Verhältnis von Kontaktfläche (A$_K$) zu freier Mantelfläche (A$_M$) des Gleitelements (20) berücksichtigenden Formfaktors (S) eingestellt ist.

2. Bauwerks-Gleitlager nach Anspruch 1,
**dadurch gekennzeichnet, dass**
die gewünschte Reibungszahl (Y) in der Gleitfläche (30) in Abhängigkeit der Umfangslänge und / oder der Grundrißform der Kontaktfläche (A$_K$) und / oder der Gleitspalthöhe (h) und / oder der Ausrichtung der Kanten der Kontaktfläche (A$_K$) in Bezug auf die Gleitrichtung eingestellt ist.

3. Bauwerks-Gleitlager nach Anspruch 1 oder 2,
**dadurch gekennzeichnet, dass**
die Größe der Kontaktfläche (A$_K$) des Gleitelements (20) in Abhängigkeit des Formfaktors (S) so optimiert, vorzugsweise minimiert, worden ist, dass die gewünschte Reibungszahl (Y) in der Gleitfläche (30) erreicht wird.

4. Bauwerks-Gleitlager nach einem der vorhergehenden Ansprüche,
**dadurch gekennzeichnet, dass**
die Größe der Reibungszahl (Y) in der Gleitfläche (30) in Abhängigkeit des Formfaktors (S) maximiert worden ist.

5. Bauwerks-Gleitlager nach einem der vorhergehenden Ansprüche,
**dadurch gekennzeichnet, dass**
es als Gleitpendellager ausgebildet ist.

6. Bauwerks-Gleitlager nach einem der vorhergehenden Ansprüche ,
**dadurch gekennzeichnet, dass**
die Kontaktfläche (A$_K$) aus zwei, insbesondere mehr als vier, Teil-Kontaktflächen gebildet wird.

7. Bauwerks-Gleitlager nach einem der vorhergehenden Ansprüche,
**dadurch gekennzeichnet, dass**
das Gleitelement (20) wenigstens eine Gleitscheibe (35) aufweist, wobei die Kontaktfläche (A$_K$) aus wenigstens einem Teil der Oberfläche der wenigstens einen Gleitscheibe (35) gebildet wird.

**8.** Bauwerks-Gleitlager nach einem der vorhergehenden Ansprüche,
**dadurch gekennzeichnet, dass**
wenigstens ein Teil der Oberfläche der wenigstens einen Gleitscheibe (35) durch wenigstens eine Ausnehmung (40) in Teil-Kontaktflächen (50) gegliedert ist.

**9.** Bauwerks-Gleitlager nach Anspruch 8,
**dadurch gekennzeichnet, dass**
die Ausnehmung (40) die Form eines Kreises, eines Rings oder eines Segments von einem der beiden aufweist.

**10.** Bauwerks-Gleitlager nach Anspruch 8 oder 9,
**dadurch gekennzeichnet, dass**
in wenigstens einer Ausnehmung (40) wenigstens ein Abstandshalter (45) angeordnet ist.

**11.** Bauwerks-Gleitlager nach einem der vorhergehenden Ansprüche,
**dadurch gekennzeichnet, dass**
das Gleitelement (20) eine Vielzahl von Gleitscheiben (35) aufweist.

**12.** Bauwerks-Gleitlager nach einem der vorhergehenden Ansprüche,
**dadurch gekennzeichnet, dass**
die Kontaktfläche ($A_K$) und/oder wenigstens eine Teil-Kontaktfläche (50) die Form eines Kreises, eines Rings oder eines Segments von einem der beiden aufweist.

**13.** Bauwerks-Gleitlager nach einem der vorhergehenden Ansprüche,
**dadurch gekennzeichnet, dass**
das Gleitelement (20) und/oder wenigstens eine Gleitscheibe (35) des Gleitelements (20) im ersten Lagerteil (15) gekammert gehalten ist.

**14.** Bauwerks-Gleitlager nach einem der vorhergehenden Ansprüche,
**dadurch gekennzeichnet, dass**
wenigstens ein Abstandhalter (45) zwischen zwei Gleitscheiben (35) angeordnet ist.

**15.** Bauwerks-Gleitlager nach einem der vorhergehenden Ansprüche,
**dadurch gekennzeichnet, dass**
das Gleitelement (20) und/oder wenigstens eine Gleitscheibe (35) zumindest teilweise aus einem Gleitmaterial, insbesondere einem thermoplastischen Gleitmaterial, besteht.

**16.** Bauwerks-Gleitlager nach einem der vorhergehenden Ansprüche,
**dadurch gekennzeichnet, dass**
das Gleitelement (20) und/oder wenigstens eine Gleitscheibe (35) zumindest teilweise aus PTFE, UHMWPE, Polyamid und/oder einer Kombination wenigstens zweier solcher Materialien, besteht.

**17.** Verfahren zur Bemessung eines Bauwerks-Gleitlagers (10) nach einem der vorhergehenden Ansprüche,
**dadurch gekennzeichnet, dass**
die Reibungszahl (Y) in der Gleitfläche (30) unter Berücksichtigung eines Formfaktors (S) eingestellt wird, wobei
die Reibungszahl (Y) in der Gleitfläche (30) als Funktion eines das Verhältnis von Kontaktfläche ($A_K$) zu freier Mantelfläche ($A_M$) des Gleitelements (20) berücksichtigenden Formfaktors (S) eingestellt wird.

**18.** Verfahren zur Bemessung eines Bauwerks-Gleitlagers nach Anspruch 17,
**dadurch gekennzeichnet, dass**
die gewünschte Reibungszahl (Y) in der Gleitfläche (30) in Abhängigkeit der Umfangslänge und / oder der Grundrißform der Kontaktfläche ($A_K$) und / oder der Gleitspalthöhe (h) und / oder der Ausrichtung der Kanten der Kontaktfläche ($A_K$) in Bezug auf die Gleitrichtung eingestellt wird.

**19.** Verfahren zur Bemessung eines Bauwerks-Gleitlagers (10) nach Anspruche 17 oder 18,
**dadurch gekennzeichnet, dass**
die Größe der Kontaktfläche ($A_K$) des Gleitelements (20) in Abhängigkeit des Formfaktors (S) so optimiert, vorzugsweise minimiert, wird, dass die gewünschte Reibungszahl (Y) in der Gleitfläche (30) erreicht wird.

**20.** Verfahren zur Bemessung eines Bauwerks-Gleitlagers (10) nach einem der Ansprüche 17 bis 19,
**dadurch gekennzeichnet, dass**
die Größe der Reibungszahl (Y) in der Gleitfläche (30) in Abhängigkeit des Formfaktors (S) maximiert wird.

**21.** Verfahren zur Bemessung eines Bauwerks-Gleitlagers (10) nach einem der Ansprüche 17 bis 20,
**dadurch gekennzeichnet, dass**
die Werkstoffpaarung in der Gleitfläche (30) bei der Optimierung konstant gehalten wird.

**Claims**

**1.** A structural sliding bearing (10) with at least one first bearing part (15), to which at least one sliding element (20) is fastened, and a second bearing part (25) which is arranged movably relative thereto, which, together with a contact surface ($A_K$) of the sliding element (20) defines a sliding surface (30), which enables sliding movements between the two bearing parts (15, 25), **characterised in that** the contact surface ($A_K$) is divided into a plurality of component contact surfaces and the shape of the contact surface ($A_K$) of the sliding element (20) is thus so constructed that a desired coefficient of friction (Y) is set in the sliding surface (30), wherein the coefficient of friction (Y) in the sliding surface (30) is set as a function of a shape factor (S), which takes account of the ratio of contact surface ($A_K$) to the free lateral surface ($A_M$) of the sliding element (20).

2.  A structural sliding bearing as claimed in Claim 1, **characterised in that** the desired coefficient of friction (Y) in the sliding surface (30) is set in dependence on the peripheral length and/or the plan shape of the contact surface ($A_K$) and/or the sliding gap height (h) and/or the orientation of the edges of the contact surface ($A_K$) with respect to the sliding direction.

3.  A structural sliding bearing as claimed in Claim 1 or 2, **characterised in that** the size of the contact surface ($A_K$) of the sliding element (20) has been optimised, preferably minimised, in dependence on the shape factor (S) so that the desired coefficient of friction (Y) in the sliding surface (30 is achieved.

4.  A structural sliding bearing as claimed in one of the preceding claims, **characterised in that** the magnitude of the coefficient of friction (Y) in the sliding surface (30) has been maximised in dependence on the shape factor (S).

5.  A structural sliding bearing as claimed in one of the preceding claims, **characterised in that** it is constructed in the form of a sliding pendulum bearing.

6.  A structural sliding bearing as claimed in one of the preceding claims, **characterised in that** the contact surface ($A_K$) is constituted by two, particularly more than four, component contact surfaces.

7.  A structural sliding bearing as claimed in one of the preceding claims, **characterised in that** the sliding element (20) includes at least one sliding disc (35), wherein the contact surface ($A_K$) is constituted by at least one portion of the surface of the at least one sliding disc (35).

8.  A structural sliding bearing as claimed in one of the preceding claims, **characterised in that** at least a portion of the surface of the at least one sliding disc (35) is divided by at least one recess (40) in component contact surfaces (50).

9.  A structural sliding bearing as claimed in Claim 8, **characterised in that** the recess (40) has the shape of a circle, a ring or a segment of one of them.

10. A structural sliding bearing as claimed in Claim 8 or 9, **characterised in that** at least one spacer (45) is arranged in at least one recess (40).

11. A structural sliding bearing as claimed in one of the preceding claims, **characterised in that** the sliding element (20) includes a plurality of sliding discs (35).

12. A structural sliding bearing as claimed in one of the preceding claims, **characterised in that** the contact surface ($A_K$) and/or at least one component contact surface (50) has the shape of a circle, a ring or a segment of one of them.

13. A structural sliding bearing as claimed in one of the preceding claims, **characterised in that** the sliding element (20) and/or at least one sliding disc (35) of the sliding element (20) is retained chambered in the first bearing part (15).

14. A structural sliding bearing as claimed in one of the preceding claims, **characterised in that** at least one spacer (45) is arranged between two sliding discs (35).

15. A structural sliding bearing as claimed in one of the preceding claims, **characterised in that** the sliding element (20) and/or at least one sliding disc (35) consists at least in part of a sliding material, in particular, a thermoplastic sliding material.

16. A structural sliding bearing as claimed in one of the preceding claims, **characterised in that** the sliding element (20) and/or at least one sliding disc (35) consists at least in part of PTFE, UHMWPE, polyamide and/or a combination of at least two such materials.

17. A method of dimensioning a structural sliding bearing (10) as claimed in one of the preceding claims, **characterised in that** the coefficient of friction (Y) in the sliding surface (30) is set taking account of a shape factor (S), wherein the coefficient of friction (Y) in the sliding surface (30) is set as a function of a shape factor (S), which takes account of the ratio of contact area ($A_K$) to the free lateral area ($A_M$) of the sliding element (20).

18. A method of dimensioning a structural sliding bearing as claimed in Claim 17, **characterised in that** the desired coefficient of friction (Y) in the sliding surface (30) is set in dependence on the peripheral length and/or the plan shape of the contact surface ($A_K$) and/or the sliding gap height (h) and/or the orientation of the edges of the contact surface ($A_K$) with respect to the sliding direction.

19. A method of dimensioning a structural sliding bearing (10) as claimed in Claim 17 or 18, **characterised in**

**that** the size of the contact surface (A_K) of the sliding element (20) is optimised, preferably minimised, in dependence on the shape factor (S) so that the desired coefficient of friction in the sliding surface (30) is achieved.

20. A method of dimensioning a structural sliding bearing (10) as claimed in one of Claims 17 to 19, **characterised in that** the magnitude of the coefficient of friction (Y) in the sliding surface (30) is maximised in dependence on the shape factor (S).

21. A method of dimensioning a structural sliding bearing (10) as claimed in one of Claims 17 to 20, **characterised in that** the material paring in the sliding surface (30) is maintained constant during the optimisation.


**Revendications**

1. Palier lisse pour la construction (10) avec au moins une première partie de palier (15) à laquelle est fixée au moins un élément de glissement (20) et une seconde partie de palier (25) agencée de manière coulissante par rapport à ladite première partie de palier, lequel élément de glissement (20) apparié à une surface de contact (A_K) de l'élément de glissement (20) forme une surface de glissement (30) qui autorise des mouvements de glissement entre les deux parties de palier (15, 25),
**caractérisé en ce que**
la surface de contact (A_K) est subdivisée en plusieurs surfaces de contact partiel et que de ce fait la forme de la surface de contact (A_K) de l'élément de glissement (20) est arrangée de façon telle qu'un coefficient de frottement (Y) souhaité s'ajuste dans la surface de glissement (30), dans lequel
le coefficient de frottement (Y) dans la surface de glissement (30) est ajusté en tant que fonction d'un facteur de forme (S) prenant en considération le rapport entre la surface de contact (A_K) et la surface d'enveloppe (A_M) libre de l'élément de glissement (20).

2. Palier lisse pour la construction selon la revendication 1,
**caractérisé en ce que**
le coefficient de frottement (Y) souhaité dans la surface de glissement (30) est ajusté en fonction de la longueur circonférentielle et/ou de la forme en projection horizontale de la surface de contact (A_K) et/ou de la hauteur de la fente de glissement (h) et/ou de l'orientation des bords de la surface de contact (A_K) par rapport à l'orientation de glissement.

3. Palier lisse pour la construction selon la revendication 1 ou 2,

**caractérisé en ce que**
la taille de la surface de contact (A_K) de l'élément de glissement (20) a été optimisée, de préférence minimisée, en fonction du facteur de forme (S) de manière telle que le coefficient de frottement (Y) souhaité dans la surface de glissement (30) soit atteint.

4. Palier lisse pour la construction selon l'une quelconque des revendications précédentes,
**caractérisé en ce que**
la valeur du coefficient de frottement (Y) dans la surface de glissement (30) a été maximisée en fonction du facteur de forme (S).

5. Palier lisse pour la construction selon l'une quelconque des revendications précédentes,
**caractérisé en ce que**
il est formé en tant que palier pendulaire de glissement.

6. Palier lisse pour la construction selon l'une quelconque des revendications précédentes,
**caractérisé en ce que**
la surface de contact (A_K) est formée de deux, en particulier de plus de quatre, surfaces de contact partiel.

7. Palier lisse pour la construction selon l'une quelconque des revendications précédentes,
**caractérisé en ce que**
l'élément de glissement (20) présente au moins un disque de glissement (35), dans lequel la surface de contact (A_K) est formée d'au moins une partie de la superficie dudit au moins un disque de glissement (35).

8. Palier lisse pour la construction selon l'une quelconque des revendications précédentes,
**caractérisé en ce que**
au moins une partie de la superficie dudit au moins un disque de glissement (35) est répartie via au moins un évidement (40) en surfaces de contact partiel (50).

9. Palier lisse pour la construction selon la revendication 8,
**caractérisé en ce que**
l'évidement (40) présente la forme d'un cercle, d'un anneau ou d'un segment de l'un des deux.

10. Palier lisse pour la construction selon la revendication 8 ou 9,
**caractérisé en ce que**
dans au moins un évidement (40) est agencée au moins une entretoise (45).

11. Palier lisse pour la construction selon l'une quelconque des revendications précédentes,

**caractérisé en ce que**
l'élément de glissement (20) présente une pluralité de disques de glissement (35).

12. Palier lisse pour la construction selon l'une quelconque des revendications précédentes,
**caractérisé en ce que**
la surface de contact ($A_K$) et/ou au moins une surface de contact partiel (50) présente la forme d'un cercle, d'un anneau ou d'un segment de l'un des deux.

13. Palier lisse pour la construction selon l'une quelconque des revendications précédentes,
**caractérisé en ce que**
l'élément de glissement (20) et/ou au moins un disque de glissement (35) de l'élément de glissement (20) est maintenu enfermé dans la première partie de palier (15).

14. Palier lisse pour la construction selon l'une quelconque des revendications précédentes,
**caractérisé en ce que**
au moins une entretoise (45) est agencée entre deux disques de glissement (35).

15. Palier lisse pour la construction selon l'une quelconque des revendications précédentes,
**caractérisé en ce que**
l'élément de glissement (20) et/ou au moins un disque de glissement (35) est au moins partiellement constitué d'un matériau de glissement, en particulier d'un matériau de glissement thermoplastique.

16. Palier lisse pour la construction selon l'une quelconque des revendications précédentes,
**caractérisé en ce que**
l'élément de glissement (20) et/ou au moins un disque de glissement (35) est au moins partiellement constitué de PTFE, d'UHMWPE, de polyamide et/ou d'une combinaison d'au moins deux parmi de tels matériaux.

17. Procédé de mesure d'un palier lisse pour la construction (10) selon l'une quelconque des revendications précédentes,
**caractérisé en ce que**
le coefficient de frottement (Y) dans la surface de glissement (30) est ajusté en prenant en considération un facteur de forme (S), dans lequel
le coefficient de frottement (Y) dans la surface de glissement (30) est ajusté en tant que fonction d'un facteur de forme (S) prenant en considération le rapport entre la surface de contact ($A_K$) et la surface d'enveloppe ($A_M$) libre de l'élément de glissement (20).

18. Procédé de mesure d'un palier lisse pour la construction selon la revendication 17,

**caractérisé en ce que**
le coefficient de frottement (Y) souhaité dans la surface de glissement (30) est ajusté en fonction de la longueur circonférentielle et/ou de la forme en projection horizontale de la surface de contact ($A_K$) et/ou de la hauteur de la fente de glissement (h) et/ou de l'orientation des bords de la surface de contact ($A_K$) par rapport à l'orientation de glissement.

19. Procédé de mesure d'un palier lisse pour la construction (10) selon la revendication 17 ou 18,
**caractérisé en ce que**
la taille de la surface de contact ($A_K$) de l'élément de glissement (20) est optimisée, de préférence minimisée, en fonction du facteur de forme (S) de manière telle que le coefficient de frottement (Y) souhaité dans la surface de glissement (30) soit atteint.

20. Procédé de mesure d'un palier lisse pour la construction (10) selon l'une quelconque des revendications 17 à 19,
**caractérisé en ce que**
la valeur du coefficient de frottement (Y) dans la surface de glissement (30) est maximisée en fonction du facteur de forme (S).

21. Procédé de mesure d'un palier lisse pour la construction (10) selon l'une quelconque des revendications 17 à 20,
**caractérisé en ce que**
l'appariement de matériaux dans la surface de glissement (30) est maintenu constant lors de l'optimisation.

**FIG. 1**

**FIG. 2**

**FIG. 3**

**FIG. 4**

FIG. 5

FIG. 6

FIG. 7

FIG. 8

FIG. 9

FIG. 10

EP 2 989 254 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009010487 A1

- JP 2007016905 A